# EUROPEAN PATENT SPECIFICATION

(11) **EP 2 182 601 B1**
(45) Date of publication and mention of the grant of the patent: **11.01.2012**
(21) Application number: 08167900.3
(22) Date of filing: 30.10.2008
(51) Int. Cl.: H02G 15/113

(54) **Sealing enclosure**
Abgedichtetes Gehäuse
Boîtier étanche

(43) Date of publication of application: 05.05.2010
(73) Proprietor: 3M Innovative Properties Company, St. Paul, MN 55133-1000 (US)
(72) Inventor: Drouard, Patrick, 44160, Pontchateau (FR); Brunet, Herve, 44600, Saint Nazaire (FR)
(74) Representative: Bergen, Katja

(56) References cited:
- EP-A- 1 711 989

## Description

### The Field of the Invention

The present invention relates generally to an enclosure. More particularly, the present invention relates to an enclosure for managing and/ or distributing cables, e.g. optical fibers for telecommunications, and in particular to a sealed branch splice closure with a latch release mechanism providing for straightforward re-entry into the closure.

### Background of the Invention

Telecommunication cables are used for distributing all manner of data across vast networks. A telecommunication cable typically includes a bundle of individual telecommunication lines (either optical fibers or copper wires) that are encased within a protective sheath. As telecommunication cables are routed across data networks, it is necessary to periodically open the cable so that one or more telecommunication lines therein may be spliced, thereby allowing data to be distributed to other cables or "branches" of the telecommunication network. The cable branches may be further distributed until the network reaches individual homes, businesses, offices, premises, and so on.

At each point where a telecommunication cable is opened, some type of enclosure is provided to protect the exposed interior of the cable. Commonly, the enclosure has one or more ports through which cables enter and/or exit the enclosure. Once inside the enclosure, the cable is opened to expose the telecommunication lines therein. Conventional telecommunication enclosures are constructed to facilitate the management and protection of individual telecommunication lines and splices thereof.

Splice closures at branch points in the network sometimes need to be accessed to add/remove/change telecommunications lines spliced therein.

Enclosures that are suitable for the protection and management of fiber telecommunications lines and splices are described in, for example, US 7141738 (B2), EP 1711989 (B1), US 7008117 (B2), US 6768859 (B2), EP 1261094 (B1), EP 1399996 (B1), US 6944388 (B2), EP 1536536 (B1), EP 657980 (B1), EP 575520 (B1), EP 105597 (B), US D427152, and US 6283670 (B1).

### Summary of the Invention

The present invention provides an enclosure that has a straightforward mechanism for entering and closing the enclosure as defined in the appended claims.

In one aspect, an embodiment of the invention described herein provides an enclosure for distributing cables. The enclosure comprises a housing configured to receive a main cable. The enclosure also comprises an organizer disposed in the housing for managing individual cables from the main cable. The enclosure also includes a cover to enclose the organizer within the housing, the cover including a one or more latches configured to engage one or more locking structures formed on the housing. The enclosure further includes a latch release mechanism slidably disposed on the housing, the latch release mechanism including one or more dislodging cam structures formed thereon. The latch release mechanism is configured to slide to a first position where the dislodging cam structures dislodge the one or more latches from engagement with the one or more locking structures.

In addition, the latch release mechanism is configured to slide to a second position where hooking clips formed thereon engage locking tabs formed on the latches.

In another aspect, the latch release mechanism includes a handle configured to receive a direct pushing or pulling force.

In another aspect, the cover includes one or more flanges located on an outer wall of the cover. In yet another aspect, at least one of the flanges includes a viewing hole formed therethrough.

In another aspect, the latch release mechanism has a different color than a color of the cover.

In another aspect, the housing includes a sealing gasket disposed in a perimeter channel formed on an outer wall of the housing, wherein the cover includes an inner wall and an outer wall, and wherein the gasket and perimeter channel are disposed between the inner wall and outer wall of the cover when the cover is secured onto the housing via the one or more latches.

In another aspect, the housing comprises a base housing and an intermediate housing, wherein the main service cable is disposable between the base housing and the intermediate housing.

In another aspect, the housing is sealed via a sealing gasket disposed between the base housing and the intermediate housing.

In another aspect, the housing includes a plurality of outwardly extending cable guides, wherein the cable guides are split to be placeable around the main service cable.

In another aspect, each cable guide is configured to receive a sealing gasket that surrounds the main service cable and, at one end, abuts a stop formed within each cable guide and, at the other end, is engaged by an abutment member. Each cable guide is further configured to receive a clamping nut that secures around the cable guide to retain the sealing gasket and the abutment member therein and to move the abutment member along the cable within the cable guide to compress the sealing gasket longitudinally and cause it to expand radially to seal against the outside of the cable and the inside of the cable guide.

In another aspect, the abutment member is constrained against rotation within the cable guide.

In another aspect, the cover comprises first and second latches disposed in a spaced relation on a first outer side wall of the cover and third and fourth latches disposed in a spaced relation on a second outer side wall of the cover.

In another aspect, each of the one or more locking structures formed on the housing includes a downward sloping portion that extends away from the outer wall of the housing.

In another aspect, the housing further comprises a plurality of distribution ports configured to receive a like number of distribution cables therein.

In another aspect, the enclosure is configured as a branch splice closure, where the main cable comprises a cable having optical fibers for communications and where the organizer comprises a fiber organizer.

The above summary of the present invention is not intended to describe each illustrated embodiment or every implementation of the present invention. The figures and the detailed description that follows more particularly exemplify these embodiments.

### Brief Description of the Drawings

Embodiments of the invention are better understood with reference to the following drawings. The elements of the drawings are not necessarily to scale relative to each other.
Fig. 1A is an isometric view of a sealed branch splice closure according to an aspect of the present invention.
Figs. 1B is a top view of the sealed branch splice closure of Fig. 1A.
Fig. 2 is an exploded view of a sealed branch splice closure according to an aspect of the present invention.
Fig. 3 is an exploded view of the cover, intermediate housing, and sliding latch release mechanism of the sealed branch splice closure according to an aspect of the present invention.
Fig. 4 is an isometric view of the underside of the cover of the sealed branch splice closure according to an aspect of the present invention.
Fig. 5 is an isometric view of the sliding latch release mechanism of the sealed branch splice closure according to an aspect of the present invention.
Fig. 6 is a view of a fiber organizer disposed within the housing of the sealed branch splice closure according to another aspect of the present invention.
Fig. 7 is a view of the fiber routing structure of the fiber organizer disposed within the housing of the sealed branch splice closure according to another aspect of the present invention.
Fig. 8 is another view of the housing of the sealed branch splice closure with the cover and fiber organizer removed according to another aspect of the present invention.
Figs. 9A-9C are isometric views illustrating the unlocking and removal of the cover of the sealed branch splice closure according to another aspect of the present invention.

While the invention is amenable to various modifications and alternative forms, specifics thereof have been shown by way of example in the drawings and will be described in detail. It should be understood, however, that the intention is not to limit the invention to the particular embodiments described.

### Description of the Preferred Embodiments

In the following Detailed Description, reference is made to the accompanying drawings, which form a part hereof, and in which is shown by way of illustration specific embodiments in which the invention may be practiced. In this regard, directional terminology, such as "top," "bottom," "front," "back," "leading," "forward," "trailing," etc., is used with reference to the orientation of the Figure(s) being described. Because components of embodiments of the present invention can be positioned in a number of different orientations, the directional terminology is used for purposes of illustration and is in no way limiting.

The present invention is directed to an enclosure with a latch release mechanism providing for straightforward re-entry into the enclosure. The enclosure can accommodate telecommunications cables and/or electrical cables. In a preferred aspect, the enclosure is configured as a sealed branch splice closure with a latch release mechanism providing for straightforward re-entry into the closure. In particular, the latch release mechanism used in removing the cover of the branch splice closure can be actuated by hand, without the use of separate tools. In one aspect, this type of closure can be utilized in an underground environment for fiber-to-the-home (FTTH) applications.

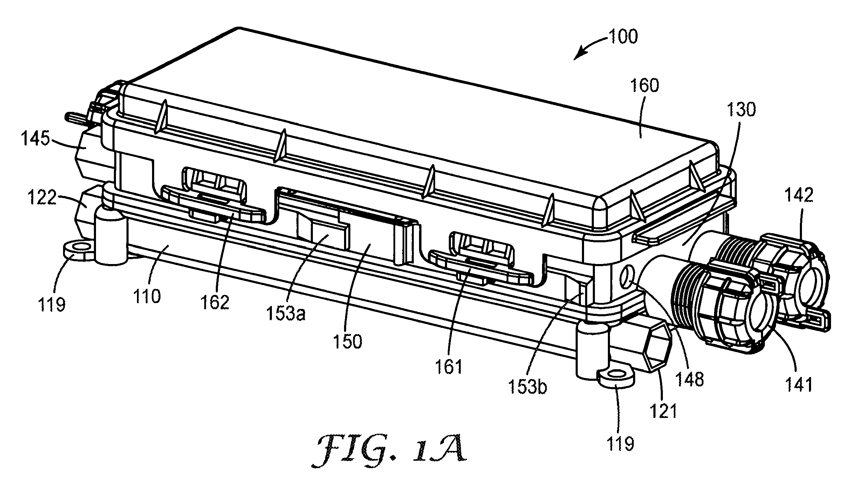

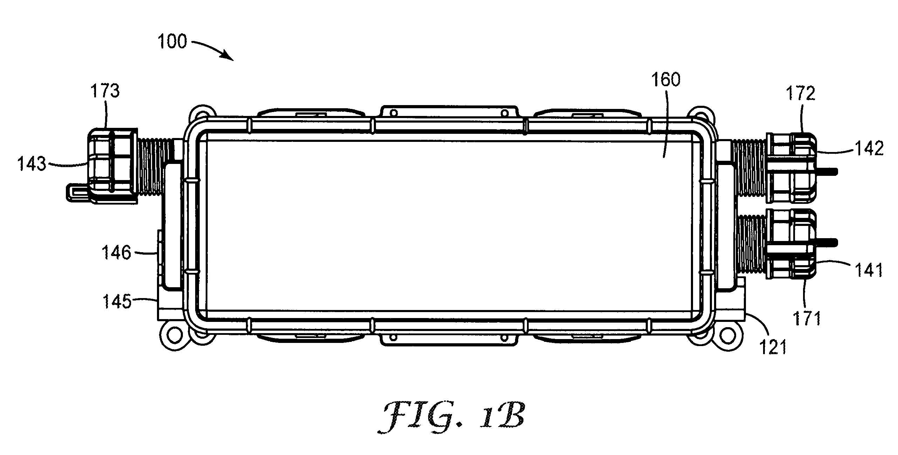

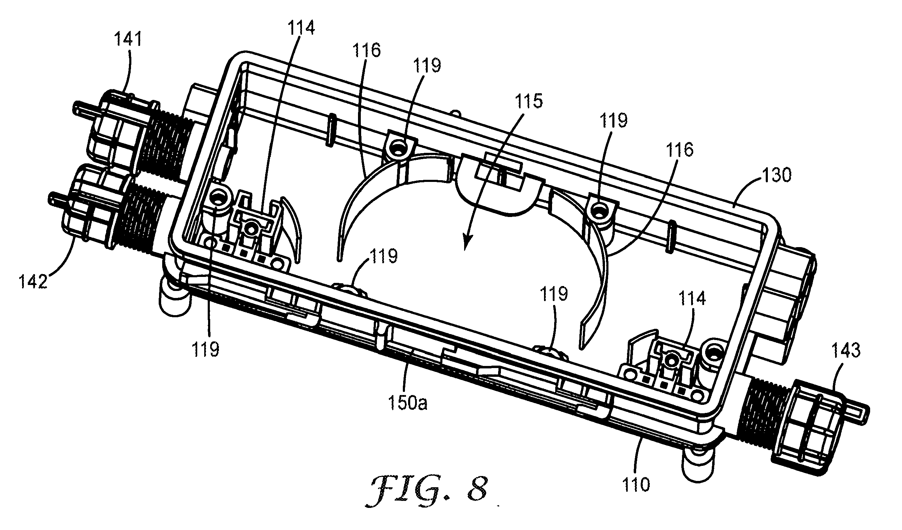

Figs. 1A-1B show an exemplary enclosure configured as a branch splice closure 100. In a preferred aspect, closure 100 is designed to receive a main service telecommunications cable (e.g., a large (at least several dozen) fiber count cable, not shown) and re-distribute at least a portion of the telecommunications lines therein via other distribution cables. Exemplary closure 100 includes a base housing 110, an intermediate housing 130 and a cover 160. The housing structure can enclose an organizer that is used to manage and distribute individual cables. In this exemplary aspect, the organizer is configured as a fiber organizer 200 that is used to manage and distribute telecommunications lines from the main service cable. In a preferred aspect, the housing structure is sealed to prevent the ingress of moisture, dust, insects, and other hazards. A latch release mechanism 150 provides for the straightforward re-entry into closure 100. In addition, the latch release mechanism 150 can also be configured to secure a cover latch in place during normal operation. Mounting structures 119 (see also Fig. 8) can be utilized to secure closure 100 onto any type of standard mounting location.

In an alternative aspect, closure 100 can be configured to accommodate electrical cables and an organizer contained therein can be configured to manage and distribute electrical wires.

Branch closure 100 can take any standard shape. In a preferred aspect, the closure 100 can take a rectangular shape of reduced dimensions in order to utilize the enclosure in areas that are space-limited. Of course, closure 100 can comprise a larger size closure, depending on the application and space availability.

The various components of the closure 100, including the base/intermediate housing 110, 130, cover 160, and fiber organizer 200, and elements thereof, can be formed of any suitable material. The materials are selected depending upon the intended application and may include both polymers and metals. For example, for use in an underground environment, such as when installed in a hand-hole or other subterranean chamber or location, a ruggedized material can be utilized. In one embodiment, the base/intermediate housing 110, 130 and cover 160, and the other components, are formed of polymeric materials by methods such as injection molding, extrusion, casting, machining, and the like. Alternatively, at least some of the components may be formed of metal by methods such as molding, casting, stamping, machining and the like. Material selection will depend upon factors including, but not limited to, chemical exposure conditions, environmental exposure conditions including temperature and humidity conditions, flame-retardancy requirements, material strength, and rigidity, to name a few.

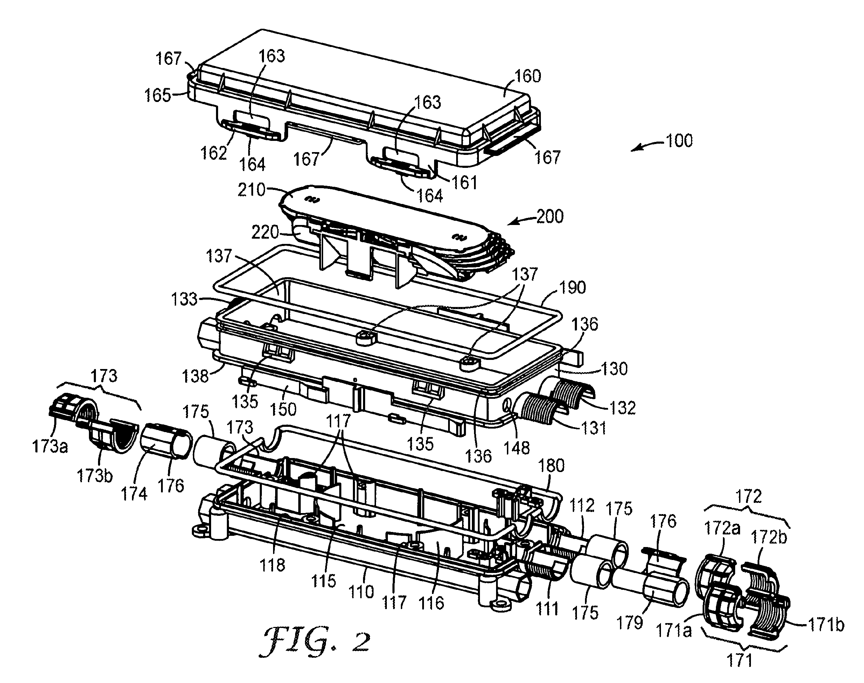

The main housing of the closure 100 can include base housing 110 and intermediate housing 130. In a preferred aspect, the housing is split into separate housing components 110 and 130 (see Fig. 2) to allow for access to the main service cable so that the cable can enter and exit the closure in an in-line manner through ports 142 and 143. This structure allows at least some portion of the fibers in the main service cable to proceed through the closure uncut. In an alternative aspect, the main service cable can enter and exit the closure 100 on the same side, such as via ports 141 and 142. In this alternative aspect, the base housing and intermediate housing can be formed as a single contiguous housing unit. In another aspect, a particular number of fibers in the main service cable (disposed in ports 142, 143) can be spliced to the terminal end of another branch of a distribution cable (disposed in port 141).

In addition, closure 100 includes one or more ports 121, 122, 145, 146 formed on either or both of the base housing 110 and the intermediate housing 130. Each of the additional ports 121, 122, 145, 146 can be configured to allow passage of at least one smaller fiber count (e.g., 24 fibers or less) distribution cables and/or one or more drop cables which supply fiber to a particular customer or premise. The base housing 110 and/or the intermediate housing 130 may have one, two, or any other number of distribution ports as is required for a particular closure. In addition, the one or more ports 121, 122, 145, 146 can be configured to receive standard cable inlet devices, such as are described in US Appl. No. 61/043652. Further, base housing 110 and/or intermediate housing 130 can include a port 148 (see Fig. 2) designed to receive a pressure valve (not shown) that can be used to test for leaks or closure pressure.

Fig. 2 shows an exploded view of exemplary closure 100.

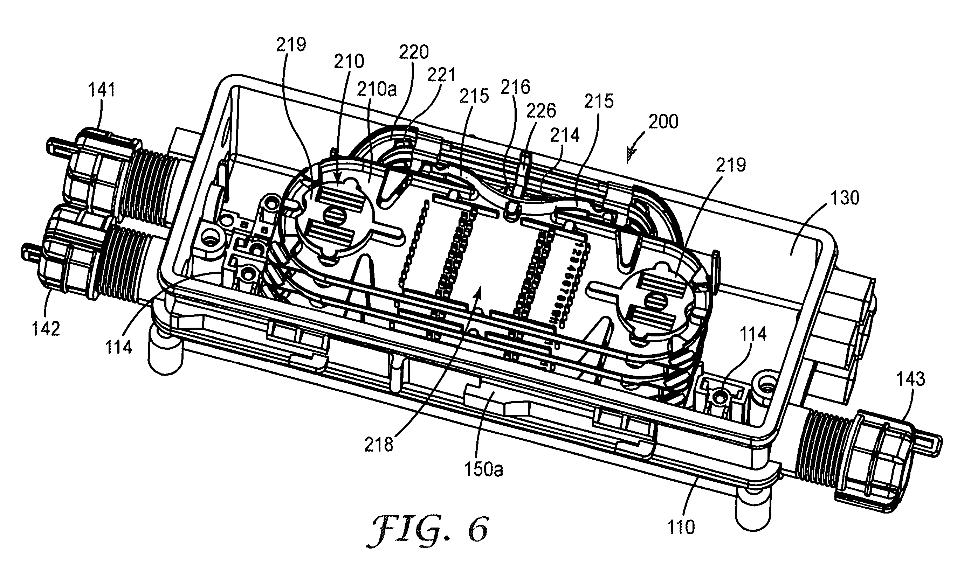

The base housing 110 includes a main cavity portion 115 that receives an organizer (see fiber organizer 200 shown in Fig. 6). In use, the main cavity portion 115 provides a fiber slack storage location for excess lengths of the fibers that are accessed from the main service cable and the excess lengths of fibers from the smaller distribution cables. In addition to including the fiber organizer 200, the main cavity portion may include slack fiber containment and routing structures 116 (see also Fig. 8) that are integrally formed in the base housing 110. In addition, as shown in Fig. 8, the main cavity portion may include cable anchoring structures 114 used to help secure the main service cable being accessed in the closure 100.

In addition, the main cavity portion includes a plurality of mounting structures 117 that provide for the securing of the intermediate housing 130 to the base housing. In exemplary aspects, the mounting structures are configured to receive bolts, screws or other conventional fasteners.

Base housing 110 also includes a channel 118 disposed about the perimeter of the upper portion thereof. The channel 118 is configured to receive a gasket 180 that forms a seal between the base housing 110 and the intermediate housing 130. Gasket 180 is preferably a single gasket structure that conforms with the perimeter of the base housing, including the shape of the lower input port portions (also referred to as lower half cable guide parts) 111, 112, and 113 of the ports 141, 142, 143. Further sealing at ports 141, 142, 143 is described in detail below.

As is also shown in Fig. 2, each of the ports 141, 142, 143 for the main service cable comprise upper and lower cable guide parts. In a preferred aspect, base housing 110 includes lower half cable guide parts 111, 112, 113 formed on outside wall portions of base housing 110 and intermediate housing 130 includes upper half cable guide parts 131, 132, 133 formed on outside wall portions thereof. The lower cable guide parts 111, 112, 113 are aligned with upper cable guide parts 131, 132, 133 when the intermediate housing 130 is secured to the base housing 110 via mounting structures 117, 137. In a preferred aspect, the cable guide parts 111, 112, 113, 131, 132, 133 include an external threaded portion to receive a clamping nut (171, 172, 173).

In more detail, the main service cable can then be sealed in the ports 141, 142, 143 using a cable sealing assembly having components 175, 176, 171 to prevent the entry of moisture into the housing in this region. The components of the cable sealing assembly (e.g., for port 141) comprise a cylindrical sealing gasket 175 of any suitable compressible material, an abutment member 176 and an internally-threaded clamping nut 171 having nut parts 171 a, 171 b. The cable sealing gasket 175 is slit lengthwise at to allow it to be place around the main service cable. Also, an abutment member 176 is provided in the form of two parts slidably mateable with each other along their side edges, which can be placed around the main service cable and brought into mating engagement. The clamping nut 171 is provided in the form of two parts 171 a, 171 b (172a, 172b for nut 172 and 173a, 173b for nut 173) with interengaging features along their side edges, which can be placed around the cable main service cable and slid into engagement with one another.

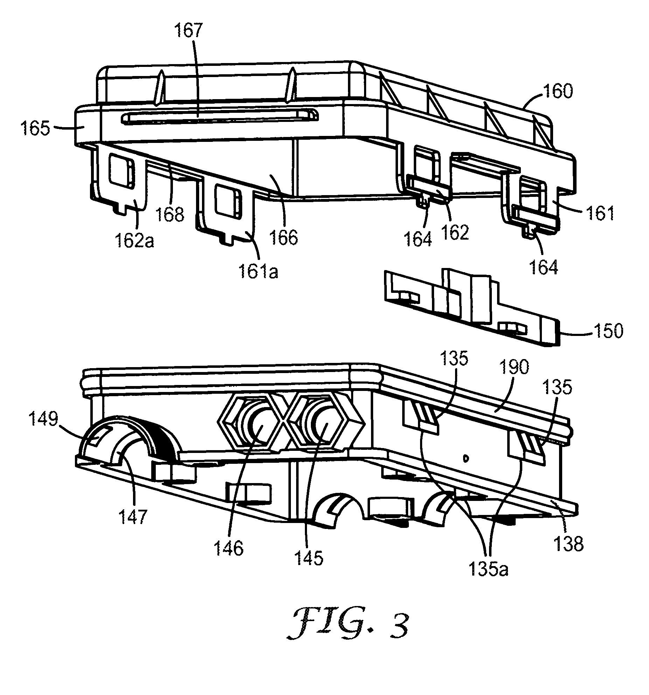

In use, the main service cable is placed between the base and intermediate housings (110, 130) and the housings are joined. In this example, the sealing gasket 175 is first placed around the main service cable and pushed into, e.g., port 142 (here port 142 includes cable guide parts 112, 132) until it is stopped by a flange (see e.g., flange 147 shown in Fig. 3) formed within the port 142. The abutment member 176 follows the sealing gasket 175 and compresses the sealing gasket 175 against the flange 147. In a preferred aspect, the orientation of the abutment member 176 can be defined by corresponding keying features (see e.g., keying feature 149 shown in Fig. 3). The two parts 172a, 172b of the clamping nut 172 are then placed around the main service cable, axially-displaced from one another and then slid together into engagement to form the completed nut. The clamping nut 172 is screwed onto the threaded end of the port 142 (cable guide parts 112, 132), causing the abutment member 176 to move further into the port 142 and compress the sealing gasket 175 in the longitudinal direction. As a result, the sealing gasket 175 will expand in the radial direction and seal against the outside surface of the main service cable and the inside surface of the port 142. The above process can also be utilized for ports 141 and 143 (components 111, 113, 131, 133). During this procedure, rotation of the abutment member 176 within the ports 141, 142, 143 and against the end of the sealing gasket 175 can be prevented by the engagement of the keying features (see e.g., abutment member keying feature 174 shown in Fig. 2 and keying feature 149 shown in Fig. 3). This structure can prevent the cable sealing gasket 175 from opening up due as the rotation of the abutment member 176 is prevented. When a port is not in used, a plug 179 (see also Fig. 6) can be inserted into the cable guide to maintain a sealed environment.

As the main service cable is mounted in the closure 100, a window cut can be used to access some or all of the telecommunications lines therein. The selected telecommunications lines can be spliced with distribution lines or drop cables using the fiber organizer 200, the structure of which is described in more detail below.

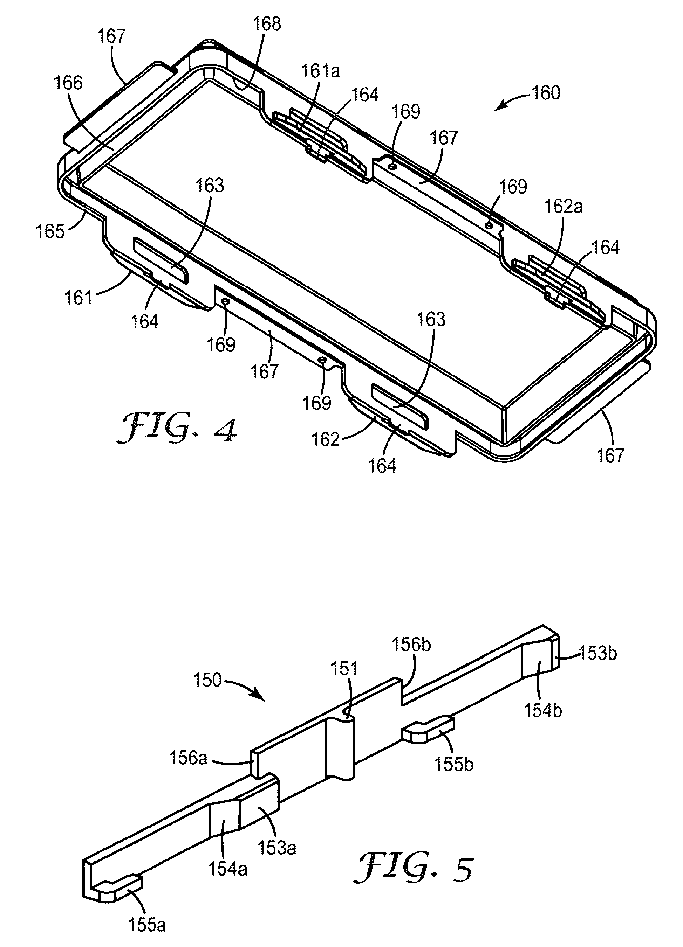

The cover 160 completes the main structure of the closure 100. The cover includes one or more latches (e.g., latches 161, 162) that are engaged by one or more locking structures 135 formed on the intermediate housing 130. As shown in Fig. 2, latches 161, 162 are formed on one side of the cover 160 (Fig. 3 shows latches 161 a, 162a formed on the opposite side of the cover). The latches 161, 162 extend away from the cover outer wall 165 and are configured to have some modest flexibility. Thus, by application of a downward force on the cover 160 overtop the intermediate/base housing structure 130, 110, the latches 161, 162 slide over the locking structures 135 until the locking structures 135 are positioned in the opening region 163 of the latches 161, 162. Each locking mechanism can include a downward sloping portion 135a (see Fig. 3) that further retains the latches in place, especially when the closure 100 is pressurized. Cover 160 can also include a plurality of flanges 167 or other similar structures formed on an outer wall 165 thereof that can be used for gripping during the closure and re-opening processes. In addition, as is shown in Fig. 4, the flanges 167 disposed on the same sides as the cover latches 161, 162 can include one or more viewing holes 169 that allow a user to see the position of the latch release mechanism 150 when viewing the closure 100 from a position above the cover 160.

In a preferred aspect, a latch release mechanism 150 is provided. The latch release mechanism 150 is a sliding element that is disposed on the side wall of the intermediate housing 130 (a second sliding latch release mechanism 150a is also provided on the opposite wall of the intermediate housing, see Fig. 8). The latch release mechanism can be retained on an outer wall of the intermediate housing 130 between the locking structures 135 and a lower ledge or ridge 138 formed thereon. The latch release mechanism is formed of a conventional polymer material that is preferably different from the material forming the intermediate housing. In one aspect, the latch release mechanism is formed from a plastic material such as a polycarbonate or polyoxymethylene.

The latch release mechanism 150 is retained on the intermediate housing 130 so that it may slide against the outer surface of the intermediate housing 130 with the application of a modest force. The sliding latch mechanism 150 can be used to release the cover latches 161, 162 from their secured positions, as is discussed further below. In addition, the latch release mechanism 150 can also secure the cover latches 161, 162 in place by engagement of the locking tabs 164 formed on each latch 161, 162 with hooking clips 155a, 155b (see Fig. 5) formed on the latch release mechanism 150. The latch release mechanism 150 can be painted or made a different color from the color of the cover 160 so that a user can see the position of the latch release mechanism when viewing the closure from a position above the cover 160 through viewing holes 169.

The sealing of the closure 100 is maintained through the use of a second gasket 190. Second gasket 190 is disposed in a channel 136 formed on the perimeter of the intermediate housing 130, as shown in Figs. 2 and 3. When the cover 160 is positioned over the intermediate housing 130, the perimeter of the intermediate housing 130 is configured to be received in a channel 168 (see Figs. 3 and 4) formed in the cover 160 between an outer wall 165 and an inner wall 166. Thus, when the cover 160 is forced onto the upper perimeter of the intermediate housing 130, the second gasket 190 is sealed between an inner surface of outer wall 165 in channel 136. In addition, the inner wall 166 provides further support for the cover 160 against an inner wall 166 of the intermediate housing 130. With this configuration, a more uniform sealing of the closure 100 can be provided, even with minor deformations of the housing or cover 160.

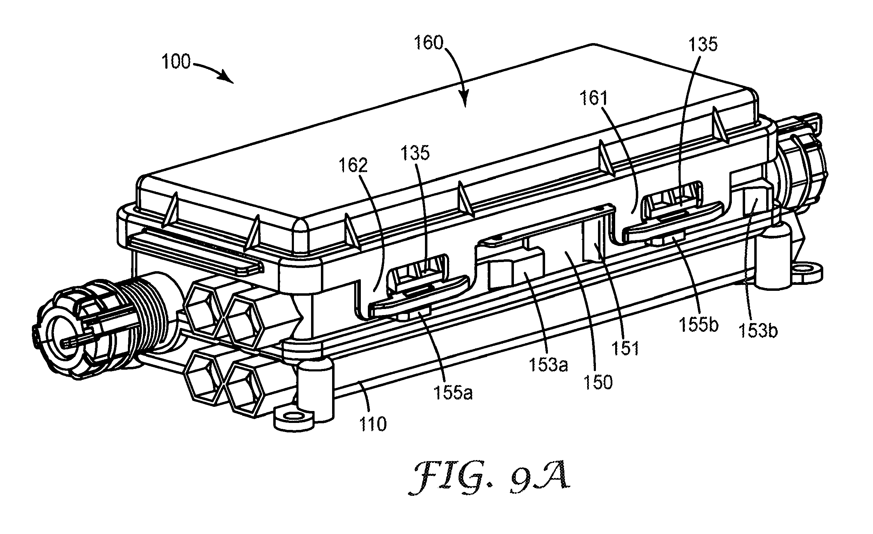

Fig. 5 shows a more detailed view of the latch release mechanism 150. A central handle 151 for finger or hand gripping is provided on an elongated rectangular body. The latch release mechanism 150 also includes first and second dislodging cam structures 153a, 153b. Each dislodging cam structure 153a, 153b includes a ramped portion 154a, 154b configured to engage and dislodge the latches 161, 162 secured on the locking structures 135 of the intermediate housing 130 (see Figs 9A-9C for more detail). As mentioned above, hooking clips 155a, 155b are also formed on the surface of latch release mechanism 150. The hooking clips 155a, 155b extend from the outer surface of the latch release mechanism 150 and are configured to secure the cover latches 161, 162 in place by engagement of the locking tabs 164 formed on each latch 161, 162. Thus, by using a modest pushing force (e.g., using a hand or a finger without the need for a separate tool) against the handle 151, the latch release mechanism 150 can be slid in either direction to release or secure the cover latches 161, 162. Overall side-to-side movement of the latch release mechanism 150 is limited due to the presence of shoulder portions 156a, 156b which contact the sides of the locking structures 135 at the end of their travel in either direction.

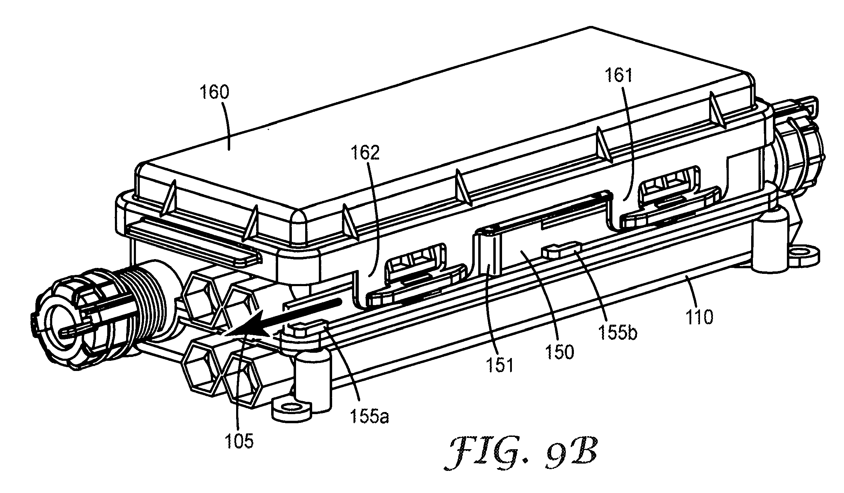

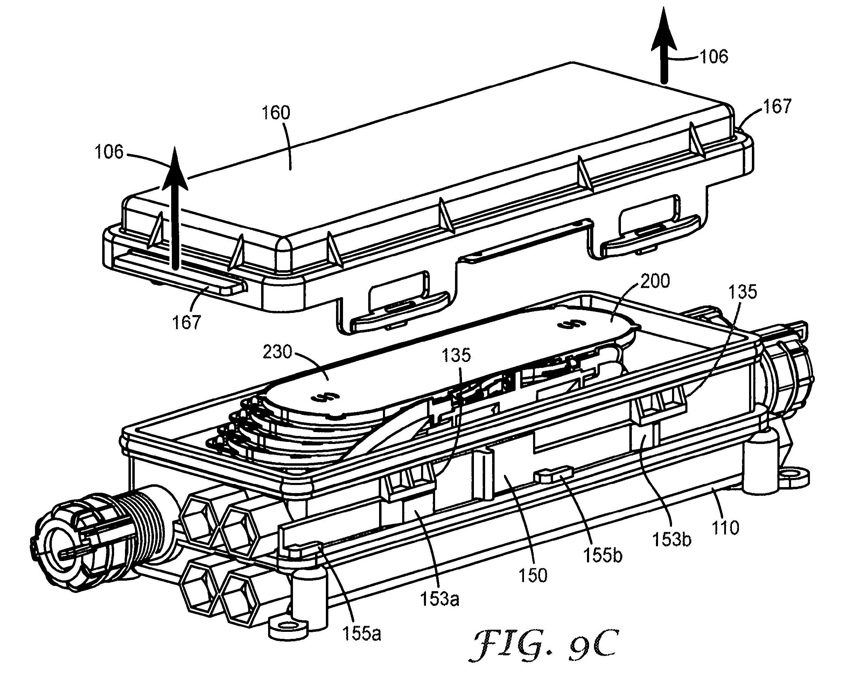

Figs. 9A-9C illustrate the straightforward removal of the cover 160 from the closure 100. In Fig. 9A, closure 100 is shown in locked position, where hooking clips 155a, 155b engage the locking tabs 164 (see Fig. 9C) of the cover latches 161, 162. In this position, the dislodging cam structures 153a, 153b are disengaged from the latches 162, 161 and the handle 151 is positioned near the latch 161. To remove the cover 160 in order to enter the closure housing, a user places a modest force on handle 151, pushing/pulling it in the direction of arrow 105 shown in Fig. 9B (of course, a similar process is utilized with the latch release mechanism 150a (see Figs. 6-8) disposed on the opposite side of the closure). As handle 151 is moved in the direction of arrow 105, the hooking clips 155a, 155b are moved away from the locking tabs 164. Also, as handle 151 is moved further in the direction of arrow 105, dislodging cam structure 153a engages latch 162 and dislodging cam structure 153b engages latch 161, where each dislodging cam structure 153a, 153b pushes the latch body away from the outer surface of the housing and away from the locking structures 135 to release the latches 161, 162 from the housing. As shown in Fig. 9C, the cover can be removed by pulling the cover in the direction of arrows 106 to expose the fiber organizer 200 disposed in the closure.

To place the cover 160 onto the closure housing, the handle 151 of the latch release mechanism 150 is moved in the direction opposite to arrow 105 (see Fig. 9B). The handle is moved to a position where the dislodging cam structures 153a, 153b and the hooking clips 155a, 155b are all clear from the cover latches 161, 162 as the cover 160 is pushed downward (i.e., opposite the direction of arrow 106) until the cover 160 latches fully engage the locking mechanisms 135 of the intermediate housing. The handle 151 can then be further moved until the hooking clips 155a, 155b engage with the locking tabs 164 of the cover latches 161, 162. In a preferred aspect, a user viewing the closure 100 from directly above the cover 160 can observe the colored structure of the latch release mechanism 150 through viewing holes 169 (see Fig. 4) formed on one or more of the flanges 167.

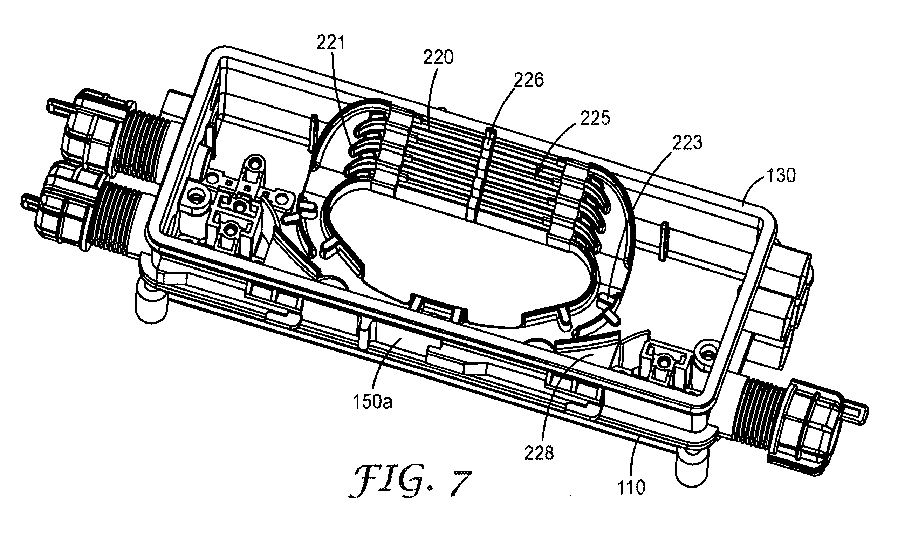

Figs. 6-8 show different views of the closure housing with the fiber organizer 200 disposed therein. In a preferred aspect, fiber organizer 200 has a multi-level structure, with a first level or splice tray section 210 (see Fig. 6) configured for fiber organizing and splicing and a second level configured as fiber routing structure 225 (see Fig. 7) that includes a splice tray support section 220. As mentioned above, the slack storage area of the enclosure is contained within a cavity region 115 of the base housing 110. In particular, the splice tray section 210 can include one or more exemplary splice trays 210a that are arranged in a stacked configuration when in use. The splice tray section 210 is coupled to the splice tray support section 220. A fiber ramp channel 221 guides fibers to/from the routing structure and slack storage area formed beneath (see Fig. 8).

In one aspect, splice tray section 210 includes one or more exemplary splice trays 210a. For smaller size enclosures, the number of splice trays may be on the order of 1 to 8 splice trays. As would be understood by one of ordinary skill in the art given the present description, a larger sized housing would accommodate a much greater number of splice trays. Splice trays 210a are provided so that, e.g., the fibers from a main service cable can be connected to smaller fiber count distribution cables or drop cables to distribute the communications signal in an intended manner.

In a preferred aspect, the splice trays 210a are rotatable to provide access to trays underneath, the fiber routing structure 225, and the slack storage area. Although the term "splice tray" is used throughout, in alternative aspects, splice tray 210a can hold passive and/or active optical components, as well as splices.

In a preferred aspect, splice tray 210a (and the other splice trays of the closure) includes at least one latching mechanism that allows for rotation of the splice tray while secured to the splice tray support section 220. In more detail, splice tray 210a includes a latching mechanism 214 formed on an outer portion of the body of splice tray 210a. The latching mechanism 214 can include a coupling portion 216 and one or more fiber entrance/exit channels 215. Coupling portion 216 can be formed as a rod and can be coupled (e.g., by snap-fit) to hook portion 226 of the splice tray support section 220 to rotatably couple the splice tray 210a. Alternatively, as would be apparent to one of ordinary skill in the art given the present description, the coupling portion can have a different configuration.

In a preferred aspect, fiber entrance/exit channels 215 are formed as extensions that extend away from the main splice tray body area. In addition, fiber entrance/exit channels 215 can extend from the latching area in a slightly curved configuration to prevent potential kinks or unintended bends being placed on the entering/exiting fibers that are received by the splice tray.

In addition, fiber entrance/exit channels 215 provide continual support to the entering/exiting fibers as the splice tray 210a is being rotated forward and backward. In a preferred aspect, the fiber entrance/exit channels 215 are formed having a (relatively) deep "U" shape in cross-section, which supports fiber disposed therein even when the splice tray 210a is fully tilted. Further, when latched, the fiber entrance/exit channels 215 can extend into the fiber ramp channels 221 formed on the splice tray support section 220.

Fiber from the distribution cable/drop cable is received in fiber entrance/exit channels 215 and then routed to a splicing area 218. The splicing area 218 is configured to support mechanical and/or fusion splices made to the fiber. The mechanical or fusion splices can be of a single fiber or of a mass or ribbon fiber. For example, one or more fibers are guided to splicing area 218 that is configured to securely hold one or more mechanical/fusion splices (e.g., via snug or snap fit). In one aspect, splicing area 218 can comprise a number of resilient clips or other holders designed to hold one or more 4X4 FIBRLOK™ splices (commercially available from 3M Company, St. Paul MN). The splicing area 218 can be formed as an integral portion of tray 210a. Alternatively, tray 210a can be formed with a cutout at splicing area 218 so that different splicing inserts can be mounted to the splice tray, depending on the application (e.g., an insert configured to support one or more fusion splices, or an insert to support one or more mechanical splices). In a preferred aspect, splicing area 218 is configured to secure one or more splices having either a 60 mm length or a 45 mm length.

In an alternative embodiment, the splicing area 218 can be configured to support a plurality of mechanical and/or fusion splices made in a stacked arrangement.

Fibers are routed to the splicing area 218 via one or more fiber routing structures 219 that allow for changing the direction of the fiber in a straightforward manner (and without bending the fiber beyond its minimum bend radius). The fiber routing structures 219 can also provide some slack storage of the incoming/exiting fiber(s). Further fiber guiding structures and tabs can be formed in splice tray 210a to retain, route and support the fiber(s) being spliced.

In an alternative aspect, splicing area 218 can be configured to hold or secure any number of different passive and/or active optical components. For example, splicing area 218 can be configured to hold or secure one or more of 1 x N fiber optic splitters, 2 x N fiber optic splitters, WDM components, CWDM components, switches, multiplexers, triplexers, duplexers, detectors, mirrors, lasers, amplifiers, or combinations thereof.

In one embodiment, a first splice tray can be configured to hold one or more splices and a second splice tray can be configured to hold one or more passive and/or active optical components. Also, each splice tray can further include a removable cover 230 (see Fig. 9C), such as a plastic, preferably transparent cover. Preferably, the cover can be mounted onto the splice tray via simple snap fit.

In more detail, Fig. 7 shows a view of the fiber routing structure 225 and the splice tray support section 220 which routes the distribution fibers from the slack storage area to the splice trays. Fibers enter and exit the splice tray support section 220 from the main service cable/distribution cables via fiber ramp channels 221, 223. The slack storage area disposed in cavity 115 of the base 110 can be used to spool excess drop and distribution fiber within the closure 100. In a preferred aspect, the slack storage area can store from about 0.5 meter to about three meters of excess fiber. In addition, as mentioned above, the coupling portion 216 of the splice tray(s) can be formed as a rod and can be coupled (e.g., by snap-fit) to hook portion(s) 226 of the splice tray support section 220 to rotatably couple the splice tray(s) to the enclosure. The fiber routing structure 225 can be coupled to the base housing 110 via one or more mounting posts (not shown) formed in the base housing and conventional fasteners.

Thus, the embodiments of the present invention are directed to an enclosure with a latch release mechanism providing for straightforward re-entry into the closure. In a preferred aspect, the enclosure is configured as a compact sealed branch splice closure for handling a telecommunications service cable having a plurality of optical fibers. In particular, the latch release mechanism used in removing the cover of the branch splice closure can be actuated by hand, without the use of separate tools. In an alternative aspect, the closure can be configured to accommodate electrical cables and an organizer contained therein can be configured to manage and distribute electrical wires. In other aspects, the enclosure can be configured, e.g., as a terminal or other type of closure.

## Claims

1. An enclosure (100) for distributing cables, comprising:
a housing configured to receive a main cable;
an organizer (200) disposed in the housing for managing individual cables from the main cable;
a cover (160) to enclose the organizer within the housing, the cover including one or more latches (161, 162, 161 a, 162a) configured to engage one or more locking structures (135) formed on the housing; **characterised in that**
a latch release mechanism (150, 150a) is slidably disposed on the housing, the latch release mechanism including one or more dislodging cam structures (153a, 153b) formed thereon and configured to slide to a first position where the dislodging cam structures dislodge the one or more latches from engagement with the one or more locking structures.

2. The enclosure of claim 1, wherein the one or more latches (161, 162, 161 a, 162a) each include a locking tab (164), wherein the latch release mechanism (150, 150a) includes a corresponding number of hooking clips (155a, 155b), and wherein the latch release mechanism is configured to slide to a second position where the hooking clips engage the locking tabs.

3. The enclosure of any of the preceding claims, wherein the latch release mechanism (150, 150a) includes a handle (151) configured to receive a direct pushing or pulling force.

4. The enclosure of any of the preceding claims, wherein the cover (160) includes one or more flanges (167) located on an outer wall of the cover, and, optionally, at least one viewing hole (169) formed in at least one of the flanges.

5. The enclosure of any of the preceding claims, wherein the latch release mechanism (150) has a different color than a color of the cover (160).

6. The enclosure of any of the preceding claims, wherein the housing includes a sealing gasket (190) disposed in a perimeter channel (136) formed on an outer wall of the housing, wherein the cover (160) includes an inner wall (166) and an outer wall (165), and wherein the sealing gasket and perimeter channel are disposed between the inner wall and outer wall of the cover when the cover is secured onto the housing via the one or more latches (161, 162, 161 a, 162a).

7. The enclosure of any of the preceding claims, wherein the housing comprises a base housing (110) and an intermediate housing (130), wherein the main service cable is disposable between the base housing and the intermediate housing.

8. The enclosure of any of the preceding claims, wherein the housing is sealed via a sealing gasket (180) disposed between the base housing (110) and the intermediate housing (130).

9. The enclosure of any of the preceding claims, wherein the housing includes a plurality of outwardly extending cable guides, the cable guides (111, 112, 113, 131, 132, 133) being split to be placeable around the main service cable.

10. The enclosure of any of the preceding claims, wherein each cable guide (111, 112, 113, 131, 132, 133) is configured to receive a sealing gasket (175) that surrounds the main service cable and, at one end, abuts a stop formed within each cable guide and, at the other end, is engaged by an abutment member (176), wherein each cable guide is further configured to receive a clamping nut (171, 172, 173) that secures around the cable guide to retain the sealing gasket and the abutment member therein and to move the abutment member along the cable within the cable guide to compress the sealing gasket longitudinally and cause it to expand radially to seal against the outside of the cable and the inside of the cable guide.

11. The enclosure of any of the preceding claims, wherein the abutment member (176) is constrained against rotation within the cable guide.

12. The enclosure of any of the preceding claims, wherein the cover (160) comprises first and second latches (161, 162) disposed in a spaced relation on a first outer side wall of the cover and third and fourth latches (161 a, 161b) disposed in a spaced relation on a second outer side wall of the cover.

13. The enclosure of any of the preceding claims, wherein each of the one or more locking structures (135) formed on the housing includes a downward sloping portion (135a) that extends away from the outer wall of the housing.

14. The enclosure of any of the preceding claims, wherein the housing further comprises a plurality of distribution ports (121, 122, 145, 146) configured to receive a like number of distribution cables therein.

15. The enclosure of any of the preceding claims configured as a branch splice closure, wherein the main cable comprises a cable having optical fibers for communications and wherein the organizer comprises a fiber organizer (200).

## Patentansprüche

1. Gehäuse (100) zur Verteilung von Kabeln, umfassend:
eine zum Aufnehmen eines Hauptkabels konfigurierte Aufnahme;
einen Organisator (200), der in der Aufnahme zur Verwaltung einzelner Kabel von dem Hauptkabel angeordnet ist;
einen Deckel (160) zum Einschließen des Organisators in der Aufnahme, wobei der Deckel eine oder mehrere Verriegelungen (161, 162, 161a, 162a) enthält, die dazu konfiguriert sind, eine oder mehrere an der Aufnahme ausgebildete Verriegelungsstrukturen (135) in Eingriff zu nehmen; **dadurch gekennzeichnet, dass**
ein Verriegelungsfreigabemechanismus (150, 150a) verschiebbar an der Aufnahme angeordnet ist, wobei der Verriegelungsfreigabemechanismus eine oder mehrere Ausrücknockenstrukturen (153a, 153b) enthält, die daran ausgebildet sind und dazu konfiguriert sind, in eine erste Position zu gleiten, in der die Ausrücknockenstrukturen die eine oder die mehreren Verriegelungen von dem Eingriff mit der einen oder den mehreren Verriegelungsstrukturen ausrücken.

2. Gehäuse nach Anspruch 1, wobei die eine oder die mehreren Verriegelungen (161, 162, 161a, 162a) jeweils eine Verriegelungsnase (164) enthalten, wobei der Verriegelungsfreigabemechanismus (150, 150a) eine entsprechende Anzahl von Hakenklammern (155a, 155b) enthält, und wobei der Verriegelungsfreigabemechanismus dazu konfiguriert ist, in eine zweite Position zu gleiten, in der die Hakenklammern die Verriegelungsnasen in Eingriff nehmen.

3. Gehäuse nach einem der vorhergehenden Ansprüche, wobei der Verriegelungsfreigabemechanismus (150, 150a) einen Griff (151) enthält, der dazu konfiguriert ist, eine direkte Schub- oder Zugkraft aufzunehmen.

4. Gehäuse nach einem der vorhergehenden Ansprüche, wobei der Deckel (160) einen oder mehrere Flansche (167), die an einer Außenwand des Deckels positioniert sind, und wahlweise mindestens ein Sichtloch (169), das in mindestens einem der Flansche ausgebildet ist, enthält.

5. Gehäuse nach einem der vorhergehenden Ansprüche, wobei der Verriegelungsfreigabemechanismus (150) eine andere Farbe hat als der Deckel (160).

6. Gehäuse nach einem der vorhergehenden Ansprüche, wobei die Aufnahme eine Dichtung (190) enthält, die in einem Umfangskanal (136) angeordnet ist, welcher an einer Außenwand der Aufnahme ausgebildet ist, wobei der Deckel (160) eine Innenwand (166) und eine Außenwand (165) enthält und wobei die Dichtung und der Umfangskanal zwischen der Innenwand und der Außenwand des Deckels angeordnet sind, wenn der Deckel über die eine oder mehreren Verriegelungen (161, 162, 161a, 162a) an der Aufnahme befestigt ist.

7. Gehäuse nach einem der vorhergehenden Ansprüche, wobei das Gehäuse ein Basisgehäuse (110) und ein Zwischengehäuse (130) umfasst, wobei das Hauptbetriebskabel zwischen dem Basisgehäuse und dem Zwischengehäuse angeordnet werden kann.

8. Gehäuse nach einem der vorhergehenden Ansprüche, wobei die Aufnahme über eine zwischen dem Basisgehäuse (110) und dem Zwischengehäuse (130) angeordnete Dichtung (180) abgedichtet ist.

9. Gehäuse nach einem der vorhergehenden Ansprüche, wobei die Aufnahme mehrere sich nach außen erstreckende Kabelführungen enthält, wobei die Kabelführungen (111, 112, 113, 131, 132, 133) geteilt sind, so dass sie um das Hauptbetriebskabel herum platziert werden können.

10. Gehäuse nach einem der vorhergehenden Ansprüche, wobei jede Kabelführung (111, 112, 113, 131, 132, 133) dazu konfiguriert ist, eine Dichtung (175) aufzunehmen, die das Hauptbetriebskabel umgibt und an einem Ende an einen Anschlag anstößt, der in jeder Kabelführung ausgebildet ist, und am anderen Ende durch ein Anlageglied (176) in Eingriff genommen wird, wobei jede Kabelführung weiterhin dazu konfiguriert ist, eine Klemmmutter (171, 172, 173) aufzunehmen, die um die Kabelführung befestigt wird, um die Dichtung und das Anlageglied darin festzuhalten und das Anlageglied entlang dem Kabel in der Kabelführung zu bewegen, um die Dichtung in Längsrichtung zu komprimieren und zu bewirken, dass sie sich radial ausdehnt, um gegen die Außenseite des Kabels und die Innenseite der Kabelführung abzudichten.

11. Gehäuse nach einem der vorhergehenden Ansprüche, wobei das Anlageglied (176) gegen Drehung in der Kabelführung eingeschränkt wird.

12. Gehäuse nach einem der vorhergehenden Ansprüche, wobei der Deckel (160) eine erste und eine zweite Verriegelung (161, 162), die in einer beabstandeten Beziehung auf einer ersten Außenseitenwand des Deckels angeordnet sind, und eine dritte und eine vierte Verriegelung (161a, 161b), die in einer beabstandeten Beziehung auf einer zweiten Außenseitenwand des Deckels angeordnet sind, umfasst.

13. Gehäuse nach einem der vorhergehenden Ansprüche, wobei jede der einen oder mehreren Verriegelungsstrukturen (135), die an dem Gehäuse ausgebildet sind, einen nach unten geneigten Teil (135a) enthält, der sich von der Außenwand des Gehäuses weg erstreckt.

14. Gehäuse nach einem der vorhergehenden Ansprüche, wobei die Aufnahme weiterhin mehrere Verteilungskanäle (121, 122, 145, 146) umfasst, die zur Aufnahme einer gleichen Anzahl von Verteilungskabeln darin konfiguriert sind.

15. Gehäuse nach einem der vorhergehenden Ansprüche, das als eine Abzweigungsspleißmuffe konfiguriert ist, wobei das Hauptkabel ein Kabel mit optischen Fasern zur Kommunikation umfasst und wobei der Organisator einen Faserorganisator (200) umfasst.

## Revendications

1. Enceinte (100) pour distribuer des câbles, comprenant :
un boîtier configuré pour recevoir un câble principal ;
un organiseur (200) disposé dans le boîtier pour gérer les câbles individuels du câble principal ;
un couvercle (160) pour enfermer l'organiseur dans le boîtier, le couvercle comportant un ou plusieurs loquets (161, 162, 161a, 162a) configurés pour s'engager avec une ou plusieurs structures de verrouillage (135) formées sur le boîtier ; **caractérisée en ce**
**qu'**un mécanisme de libération de loquet (150, 150a) est disposé de manière coulissante sur le boîtier, le mécanisme de libération de loquet comportant une ou plusieurs structures de cames de délogement (153a, 153b) formées sur lui et configurées pour glisser dans une première position dans laquelle les structures de cames de délogement délogent le ou les loquets de leur engagement avec la ou les structures de verrouillage.

2. Enceinte selon la revendication 1, dans laquelle le ou les loquets (161, 162, 161a, 162a) comportent chacun une languette de verrouillage (164), le mécanisme de libération de loquet (150, 150a) comportant un nombre correspondant de pinces d'accrochage (155a, 155b) et le mécanisme de libération de loquet étant configuré pour glisser dans une deuxième position dans laquelle les pinces d'accrochage s'engagent avec les languettes de verrouillage.

3. Enceinte selon l'une quelconque des revendications précédentes, dans laquelle le mécanisme de libération de loquet (150, 150a) comporte une poignée (151) configurée pour recevoir une force de traction ou de poussée directe.

4. Enceinte selon l'une quelconque des revendications précédentes, dans laquelle le couvercle (160) comporte une ou plusieurs brides (167) situées sur une paroi extérieure du couvercle, et, en option, au moins un trou de regard (169) formé dans au moins l'une des brides.

5. Enceinte selon l'une quelconque des revendications précédentes, dans laquelle le mécanisme de libération de loquet (150) a une couleur différente d'une couleur du couvercle (160).

6. Enceinte selon l'une quelconque des revendications précédentes, dans laquelle le boîtier comporte une garniture d'étanchéité (190) disposée dans un canal périphérique (136) formé sur une paroi extérieure du boîtier, le couvercle (160) comportant une paroi intérieure (166) et une paroi extérieure (165), et la garniture d'étanchéité et le canal périphérique étant disposés entre la paroi intérieure et la paroi extérieure du couvercle lorsque le couvercle est fixé sur le boîtier par le biais du ou des loquets (161, 162, 161a, 162a).

7. Enceinte selon l'une quelconque des revendications précédentes, dans laquelle le boîtier comprend un boîtier de base (110) et un boîtier intermédiaire (130), le câble de service principal pouvant être disposé entre le boîtier de base et le boîtier intermédiaire.

8. Enceinte selon l'une quelconque des revendications précédentes, dans laquelle le boîtier est scellé par le biais d'une garniture d'étanchéité (180) disposée entre le boîtier de base (110) et le boîtier intermédiaire (130).

9. Enceinte selon l'une quelconque des revendications précédentes, dans laquelle le boîtier comporte une pluralité de guides-câbles s'étendant vers l'extérieur, les guides-câbles (111, 112, 113, 131, 132, 133) étant divisés de manière à pouvoir être placés autour du câble de service principal.

10. Enceinte selon l'une quelconque des revendications précédentes, dans laquelle chaque guide-câble (111, 112, 113, 131, 132, 133) est configuré pour recevoir une garniture d'étanchéité (175) qui entoure le câble de service principal, et à une extrémité, bute contre une butée formée dans chaque guide-câble, et à l'autre extrémité, est engagée par un organe d'aboutement (176), chaque guide-câble étant en outre configuré de manière à recevoir un écrou de serrage (171, 172, 173) qui est fixé autour du guide-câble pour retenir la garniture d'étanchéité et l'organe d'aboutement à l'intérieur et pour déplacer l'organe d'aboutement le long du câble dans le guide-câble pour comprimer la garniture d'étanchéité longitudinalement et la faire se dilater radialement pour réaliser l'étanchéité contre l'extérieur du câble et l'intérieur du guide-câble.

11. Enceinte selon l'une quelconque des revendications précédentes, dans laquelle l'organe d'aboutement (176) est contraint pour empêcher sa rotation dans le guide-câble.

12. Enceinte selon l'une quelconque des revendications précédentes, dans laquelle le couvercle (160) comprend des premier et deuxième loquets (161, 162) disposés de manière espacée sur une première paroi latérale extérieure du couvercle et des troisième et quatrième loquets (161a, 161b) disposés de manière espacée sur une deuxième paroi latérale extérieure du couvercle.

13. Enceinte selon l'une quelconque des revendications précédentes, dans laquelle chacune de la ou des structures de verrouillage (135) formées sur le boîtier comporte une portion inclinée vers le bas (135a) qui s'étend à l'écart de la paroi extérieure du boîtier.

14. Enceinte selon l'une quelconque des revendications précédentes, dans laquelle le boîtier comprend en outre une pluralité d'orifices de distribution (121, 122, 145, 146) configurés de manière à recevoir un nombre égal de câbles de distribution à l'intérieur.

15. Enceinte selon l'une quelconque des revendications précédentes, configurée sous forme de fermeture d'épissure à branches, dans laquelle le câble principal comprend un câble ayant des fibres optiques de communication et dans laquelle l'organiseur comprend un organiseur de fibres (200).
